# EUROPEAN PATENT APPLICATION

(11) **EP 1 975 595 A1**
(43) Date of publication of application: **01.10.2008**
(21) Application number: 07425169.5
(22) Date of filing: 21.03.2007
(51) Int. Cl.: G01N 1/31

(54) **Automatic processor for histological samples and its operation**

(71) Applicant: Diapath S.r.l., 24057 Martinengo (BG) (IT)
(72) Inventor: Bergamini, Vladimiro, 24057 Martinengo (BG) (IT); Conte, Andrea, 24121 Bergamo (IT)
(74) Representative: Trupiano, Federica

(57) **Abstract**

The present invention concerns an automatic processor for histological samples comprising one or more drums suitable for containing the biological material to be processed, means of handling the drums between multiple workstations and means for feeding the drums with calibrated volumes of reagents, or other chemical substances, from a plurality of vessels. The processor also includes a control unit for the means of handling and the means of feeding. Advantageously, a plurality of identification elements are each associated to a drum and/or tank and/or container, and the control unit is connected to means of recognition of said identification elements, The invention also concerns a method for the operation of the automatic processor.

## Description

The present invention concerns an automatic processor for the preparation of histological samples and the associated method of operation.

As is known, the analysis of histological, post-mortem and cytological samples etc. is of fundamental importance in modern medicine, as is ensures early and accurate diagnoses.

Organic tissues taken from patients must be properly treated (in the common language of this field it is said that they must be "processed") to be incorporated in an inclusion medium, usually paraffin, having an adequate consistency to allow cutting into slices. Once processed, the tissues are arranged in slices on traditional slides for analysis.

As a rule, the sample processing procedure provides for the following main phases:
- dehydration phase, in which the water contained in the samples is eliminated with the aid of anhydrous reagents,
- clarification phase, in which the anhydrous reagent is substituted by a component (medium for clarification) miscible with both the anhydrous reagent and the inclusion medium, and
- saturation phase, in which the inclusion medium is introduced.

In practice, each of the previous phases contemplates numerous intermediate passages. For example, the said dehydration phase is implemented by treating the samples and carrying out successive washes, using anhydrous reagents of increasing strength (for example, 70°, 80°, 90°, 95°, etc.).

International patent application WO 03/100384 describes a typical processing procedure and a reagent that can be used to optimize the procedure itself.

Traditionally, the operator in charge for the laboratory processing of samples contemplates carrying out all of the necessary passages manually.

Furthermore, personnel carrying out the processing must necessarily and rigorously follow the sequence of passages contemplated for each type of sample according to the type of analysis to be carried out. It is obvious that the more different reagents must be used in a set sequence, the higher the risk related to human error.

In recent years, automatic processors have become widespread on the market, or rather equipment able to autonomously carry out many phases of sample processing without intervention by laboratory technicians, with evident time savings with respect to the traditional, completely manual solution, and with the simultaneous reduction in the risk of error related to the operation and the manual actions of the technicians. In general, the processors currently available are equipped with a compartment for housing a plurality of vessels containing the reagents and similar chemical substances, one or more drums and/or tanks and/or containers suitable for containing the organic material to be processed, means of handling the drums between multiple workstations, means for transferring calibrated volumes of reagents from said vessels to the drums and means for discharging the liquid solutions outside of the drums, when necessary.

The laboratory technician inserts the tissue to be treated in a drum of the processor that, based on a predetermined program, automatically carries out the necessary operations for processing. The drum is moved to in correspondence to successive workstations. In each station, the tissue contained in the drum is subjected to treatment with a reagent, or with the inclusion medium, etc. At the end of the treatment, after being opportunely prepared, for example, by inclusion in paraffin blocks, the tissue is ready to be reduced to slices that can be arranged on laboratory slides.

The program that controls the operation of the automatic processor is normally loaded on an electronic control unit that takes care of operating the various parts of the system according to parameters selected by the user.

A significant drawback of the automatic processors currently available is due to the fact that they do not allow a posteriori checks to be made on the sequence and duration of the operations carried out, the reagents effectively used, the quantity of reagents used and the residual amounts, the quality of the reagents themselves, etc. In other words, once the automatic processor has completed the tissue treatment, it is not possible to check if one or more process passages have been correctly carried out; for example, it is not possible to check if the initially planned reagent has been used and for the established time interval.

The accidental substitution of a reagent with a different one can negatively affect the quality of the final sample or, in the worst cases, can render the tissue unusable for processing. In addition, even more serious cases of accidental swapping in the reagent sequence, an error in the concentration used or, in any case, an error in carrying out of any of the operations planned for the processing of a particular sample, can result in an erroneous evaluation of the sample being analyzed, with consequences that can also affect the final diagnosis. Consequently, the importance of having a reliable, safe processing system that limits human intervention to a minimum and which simultaneously supplies complete traceability of the operations carried out on each analyzed sample appears obvious.

Traditional processors do not provide for the possibility of blocking processing if an undesired substitution of reagents or other substances used in the process occurs.

Furthermore, in current processors, the drums are fitted with an agitator with the function of maintaining the liquid contained in the same drums in motion. The agitator is formed, for example, by an ovoid spherule, rod or cylinder made of a magnetic material and usually coated with an inert material, such as Teflon for example, and is sensitive to the magnetic field generated by specially provided devices outside the drum, such as rotating magnets for example. Under the action of the magnetic field, the spherule moves in a whirl inside the drum, agitating the liquid it contains.

Disadvantageously, in hitting against the metal walls of the drum, the spherule becomes worn and can release particles of the metal of which it is made or, if the spherule is coated with a second material, it can release particles of the coating material, with evident risks of polluting the reagents and the samples.

The object of the present invention is that of making available an automatic processor and the associated method of operation that resolve the drawbacks of traditional processors in a simple, effective manner and with a minimal increase in costs.

Another object of the present invention is that of making available an automatic processor that allows a posteriori checking on the accuracy of the operations carried during processing.

A further object of the present invention is that of making available an automatic processor that allows histological samples, or equivalent samples, to be processed with high "traceability", or rather samples associable with the various operations of the associated processing in an unambiguous manner.

Another object of the present invention is that of making available a processor that automatically checks the nature of the substances used each time for the processing, blocking the treatment of samples in the case of errors in the use of these substances or in the case of deterioration of the substances themselves with respect to a standard reference quality.

A further object of the present invention is that of making available an automatic processor equipped with means of agitation not subject to wear and which do not release foreign particles into solutions/suspensions with which said means of agitation make contact.

These and other objectives are achieved by the present invention, which concerns an automatic processor for histological samples including one or more drums suitable for containing the biological material to be processed, means of handling said drums between multiple workstations, means of feeding calibrated reagents or other chemical substances from a plurality of vessels to the drums, and at least one control unit of said means of handling and said means of feeding, characterized in that it also includes a plurality of identification elements, each associated to a drum and a vessel, and means of recognition for said identification elements.

The control unit processes the signals supplied by the means of recognition and, based on this processing and the outcome of recognition, operates the processor subsystems, such as, for example, the means of handling the drums, the means of supplying reagents, inclusion medium (paraffin), washing solution, etc., the agitators inside the drums, possible heat regulation of the drums and/or containers and/or tanks, etc.

Advantageously, the processor's control unit is able to identify all of the substances used in the treatment of the biological material. In this way, the risk of treating the biological material with inappropriate reagents or solutions is greatly reduced.

The identification elements can be of various types, as long as they guarantee unambiguous identification by the control unit. For example, the identification elements can be printed labels, magnetic tags, RFID (Radio Frequency iDentification) tags, bar codes, special inks, etc.

The means of recognition, connected to the control unit, are able to "read" the identification elements. For example, such means can include optical readers, magnetic readers, RFID tag readers, etc.

Preferably, the drums and/or tanks and/or containers of reagents and other substances used for processing are provided with an RFID tag, applied, for example, by hand by the laboratory technician when setting up the processor, or by the manufacturer of the reagents/substances. The processor is equipped with an RFID tag reader, mounted, for example, on the means of handling the drums. The reader is activated whenever it is envisaged that the control unit should identify the drum, reagents and other substances used at a given moment. Each RFID tag is associated with a code that can be remotely "read" by the processor's reader. Preferably, the RFID tags are of the passive type, or rather they are activated by the reader during reading via radio-frequency waves.

The processor also includes means of agitating the substances contained in the drums and means of discharging these substances, these also controlled by the control unit so that the duration and intensity of agitation, just as in the duration of treatment before discharging the solutions outside the drums, can be controlled without committing errors regarding the identification of the actual solutions.

The present invention also concerns a method for operating an automatic processor for histological samples including one or more drums suitable for containing the biological material to be processed, means of handling said drums between multiple workstations, means for feeding the drums (or tanks) with calibrated volumes of reagents, or other chemical substances, from a plurality of vessels, and at least one control unit for said means of handling and said means of feeding, characterized in that it includes the following phases of:
- providing each drum and each container with at least one identification element,
- carrying out the identification of said drums and said vessels via means of recognition able to read the associated identification elements,
- sending a signal indicating the outcome of identification to said control unit for processing, and
- operating said means of handling and said means of feeding on the basis of said processing.

The identification phase of the drums (or tanks) and vessels of the substances used in the processing can be carried out before each activation of the means of handling and the means of feeding. Alternatively, the identification phase can be carried out before a processing cycle or at predetermined time intervals.

In general, the control unit controls at least one operating parameter of the processor according to the present invention, on the basis of the processing of signals provided by the means of recognition. For example, the control unit can regulate the flow of reagents or other chemical substances fed to the drums, the duration and the sequence of treatments on the biological material, the duration and intensity of agitation, etc.

The processor according to the present invention has a considerable advantage with respect to traditional automatic processors. Thanks to the fact that the reagents and other substances used for processing are identified in an unambiguous manner, without errors, the control unit can be programmed to halt the processor in cases where a substance is not identified. In other words, in the control-unit programming phase, the codes corresponding to the identification elements applied to the containers of the reagents (and substances) that it is wished to be used are stored in the control unit itself. If one of the stored codes is not detected by the control unit during processing, the same unit halts processing and generates an alarm signal to indicate that the unrecognised substance in the container is not permitted. The laboratory technician can then take action to check if the substance, for example a reagent, is effectively the one expected for the treatment. The control unit is set up to accept manual commands and the technician can reinstate processing if he/she considers the substance suitable for the purpose.

Advantageously, the processor according to the present invention can be configured to work with reagents and substances marketed by a specific manufacturer, for example a manufacturer who guarantees high-quality standards. The identification elements can be set up on the containers of substances directly by the manufacturer. The automatic processor according to the present invention carries out the processing of biological material only if the container identification carried out by the control unit is positive.

The processor according to the present invention is also equipped with an agitator, positioned inside each drum and/or tank and/or container, primarily composed of one or more magnetically operated rotors. Advantageously, the rotors do not hit against the walls of the associated drum and therefore are not subject to wear and do not release particles.

Further aspects and advantages of the present invention will become clearer from the description that follows, made by way of non-limitative example, with reference to the attached schematic drawings, where:
- Figure 1 is a perspective view of un automatic processor according to the present invention,
- Figure 2 is a perspective view of the automatic processor in Figure 1,
- Figure 3 is a perspective view of a detail of the automatic processor in Figure 1,
- Figure 4 is a perspective view of a detail of the automatic processor in Figure 1,
- Figure 5 is a perspective view of a component of the automatic processor in Figure 1,
- Figure 6 is a perspective view of another component of the automatic processor in Figure 1, and
- Figure 7 is a perspective view of a detail of the automatic processor in Figure 1.

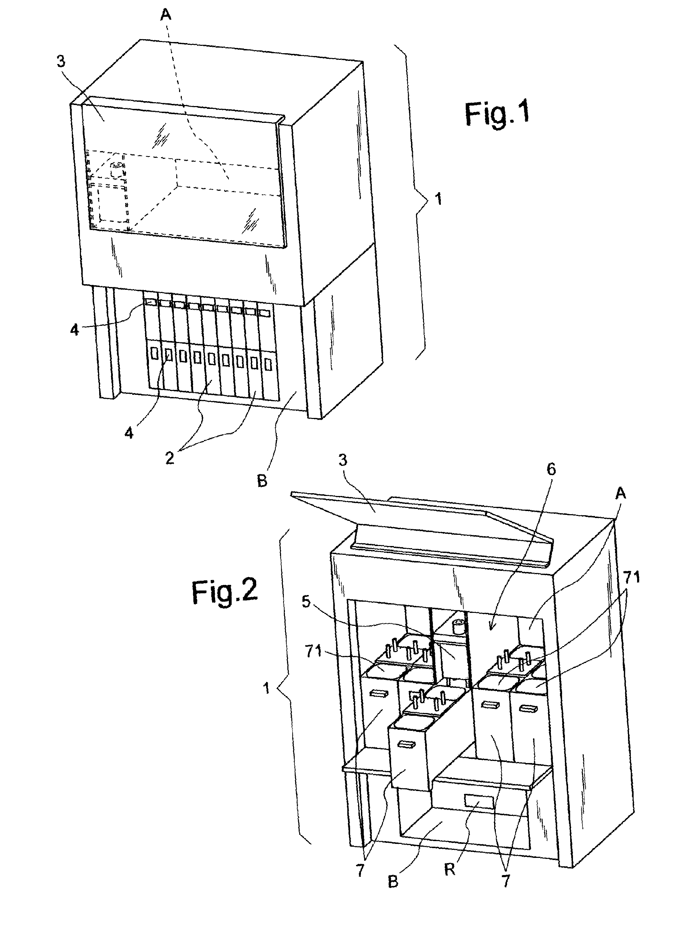

With reference to Figure 1, an automatic processor 1 according to the present invention is shown in perspective. The processor includes a work compartment A, in which the biological material to be processes is treated, and a compartment B for housing a plurality of containers 2 for reagents, inclusion mediums, washing solutions and, in general, for substances usually used for processing biological samples.

Compartment A is protected by a transparent cover 3, removable via a sliding guide, as shown in Figure 2.

The containers 2 are provided with identification elements 4, for example labels with bar codes or RFID tags. These identification elements are recognised by specially provided readers of the processor 1.

The identification elements 4, preferably RFID tags, are supplied by the manufacturer of the reagents or substances contained in the vessels 2. At the moment of being read by the processor 1, each tag 4 provides an identification code, for example a bar code, univocally bound to the product present in the container 2.

Figure 2 shows the processor 1, in perspective, with compartment B empty, or rather without any containers 2, and with compartment A open, or rather with the cover 3 raised.

The tissue samples to be processed are initially positioned in one or more drums 5 by the laboratory technician. Figure 2 shows a drum 5 supported by means of handling 6, which have the function of moving the drum 5 between the workstations, and in particular, between a plurality of chemical baths.

As shown in Figure 2, a number of extractable drawers 7 are housed in compartment A, each equipped with tanks 71 in which chemical baths are arranged. Preferably, the drawers 7 are modular, interchangeable and made of metal. In the embodiment shown in the figure, compartment B has sufficient size to allow the housing of a maximum of fifteen tanks 71.

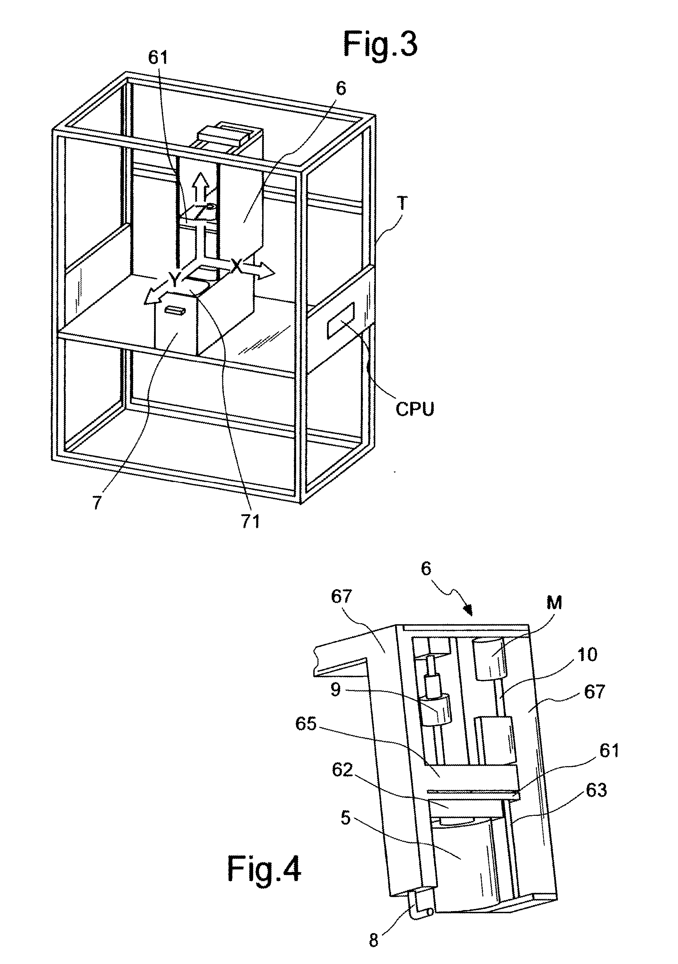

Figure 3 shows the support structure of the processor 1. The means of handling 6, which include a spatially mobile head 61, are constrained to the frame T. In particular, the head 61 moves the drums 5 in the three orthogonal directions X, Y and Z indicated in Figure 3, such that each drum 5 can be brought into alignment with one or more tanks 71.

The head 61 is driven by stepper motors and helical screws, retained by ball-bearing pads. Movement of the mobile head 61 is controlled by a specially provided electronic control unit CPU, which sends electrical signals to comand the stepper motors. The instantaneous position of the mobile head 61 is detected by position sensors (not shown), preferably photo-optical sensors and optical guides. Based on the position of the head 6 detected by the sensors, the control unit CPU makes corrections as required via the motors (position feedback).

Figure 4 shows, in detail, a drum 5 anchored to the mobile head 61. Anchorage is ensured by a connection element 62 fitted with a silicone gasket 63. The connection element 62 allows rapid engagement and release of the drum 5. When the connection element is brought up against the drum 5, a vacuum is created inside the drum 5. A sensor 10 measures the pressure inside the drum 5. The said silicone gasket 63 ensures the air sealing of the coupling. The drum 5 is engaged by the head 61 at the beginning of processing and is released when it is completed. Movement of the head 61 is handled by an electromagnetic unit 65.

Figure 4 shows the motor M with the function of moving the head 61 along the direction Z shown in Figure 3.

The sample-carrying drum 5 is suitable to contain (if necessary via tanks positioned inside it) reagents and/or chemical substances taken from the containers 2. The processor 1 is fitted with means of feeding 8 these reagents/substances to the drums 5. The means of feeding are operated by the control unit CPU. In the embodiment shown in Figures 1-4, the means of feeding include a load/discharge lance 8 that allows the reagents and other chemical substances to be fed to the drum 5 and to discharge the chemical bath from the drum 5 to the outside.

A probe 9, or an equivalent optical sensor, is positioned above the head 61 to detect any obstacles along the path of the head 61.

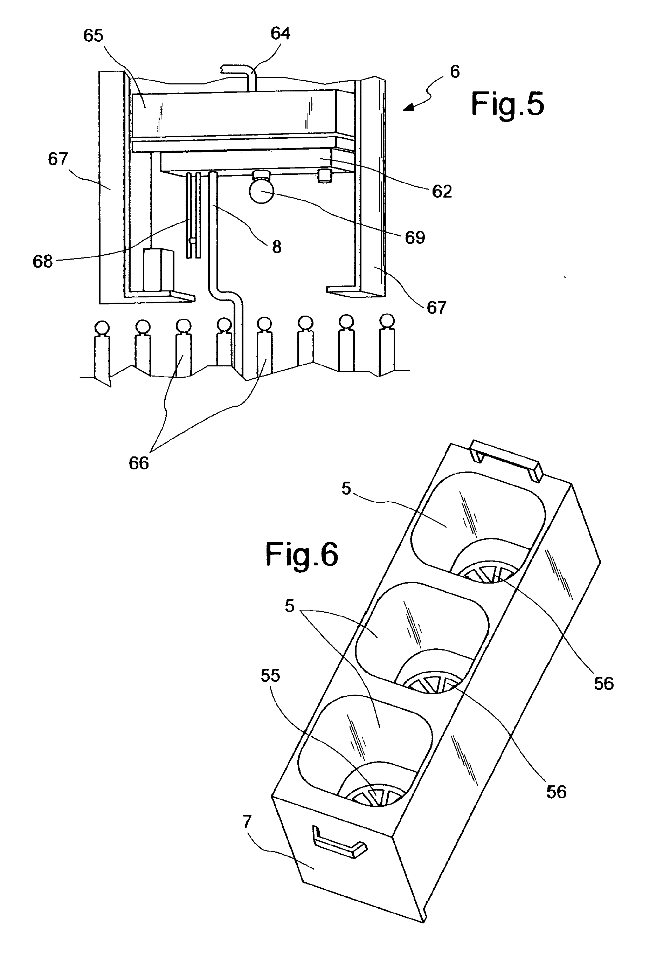

Figure 5 shows the handling head 61 in detailed perspective. Reference number 64 indicates a duct for feeding and sucking air. The duct 64 communicates with the lower surface of the head 61 and can be activated to suck air from the drum 5 and create a sufficient depression to allow the aspiration of reagents and other substances from the respective containers 2, configured in fluid communication with the drum 5. Air is fed to the drum 5, through the duct 64, to restore or increase the pressure inside the drum 5.

The handling heads 61 are provided with a plurality of engagement pins 66 on the upper surface (in Figure 5 the pins 66 of two handling heads 61 are visible) destined to be engaged by the electromagnetic unit 65 and moved by motor M along the guides 67 shown in Figure 4 and in Figure 5.

In Figure 5, a level sensor 68 with the function of measuring the level of solutions contained in the drum 5, for example, the level of the reagents contained therein, is also visible. Preferably, the sensor 68 is of the capacitive type.

The lance 8, for example, allows chemical products to be discharged outside of the drum 5.

Preferably, the processor 1 is equipped with agitators that do not contemplate the use of traditional spherules 69. Figure 6 shows a drawer 7 fitted with three tanks 5. Each tank is equipped with an agitator 55 including at least one rotor 56, preferably of the blade type. The rotors 56 are magnetically operated. In particular, the rotors 56 are fitted with elements that can be magnetically activated, for example, neodymium pads.

Advantageously, the rotors 56 are not subject to impact against the walls of the drum 5 and therefore do not release metal particles that could pollute the chemical baths and/or the samples to be processed.

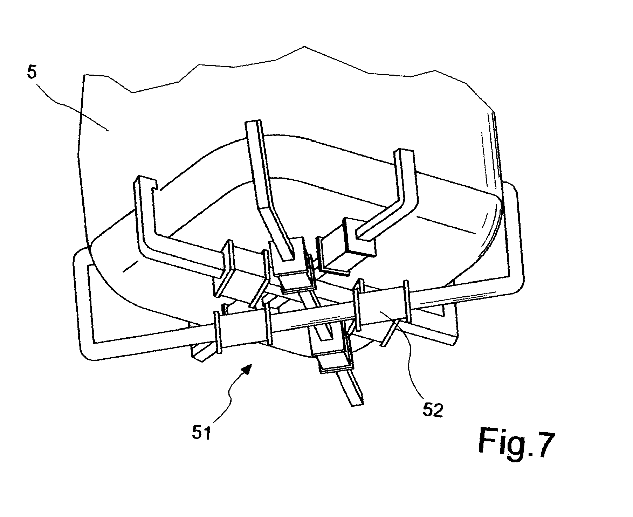

The magnetic field is generated by a set of pole shoes positioned below the drum 5. Figure 7 show a possible embodiment of the set 51 in perspective, including eight pole shoes 52 that generate the necessary electromagnetic force for the rotation of the rotor 56 positioned inside the respective drum 5.

The operation of the processor 1 according to the present invention and the resultant advantages with respect to traditional processors will now be described.

The control unit CPU is programmed to operate the processor's subsystems according to predetermined algorithms. In practice, the control unit operates on the basis of instructions implemented in software stored in the same unit CPU.

One of the subsystems connected to the control unit is a reader R for the identification elements 4. The reader R is a device able to acquire the information stored in the identification elements 4. For example, the reader R can be an optical or a magnetic reader, or an RFID tag reader. According to the preferred embodiment of the present invention, the reader R è able to read RFID tags when activated by the control unit CPU.

When the reader R is activated, it acquires the information stored on the RFID tags applied to the containers 2 and/or drums 5. The information regards, for example, the type of product held in the container 2 or drum 5, batch number, expiry date (an important information for reagents), product dilution level, classification regarding the hazardous nature of the product, etc. In practice, this information is encoded in the RFID tag and identifies the products in an unambiguous manner. Preferably, the information includes alphanumeric or numeric codes that identify the manufacturer, the product and its dilution level. For example, the code DIA001 corresponds to manufacturer Diapath, product Ottix Plus and dilution level 90, code DIA002 corresponds to manufacturer Diapath, product xylene and dilution level 80, etc. The information is transmitted from the reader R to the control unit CPU, which then processes it according to the stored algorithms.

The control unit processes the information and operates the subsystems of the automatic processor 1 on the basis of the identification of the products.

For example, the reader R can be positioned on the processor 1 so as to read the RFID tags of all the containers 2 inserted in compartment B. This is possible if RFID tags that can read at a distance are used. Alternatively, the reader R can be positioned on a pen tip, or similar device, such as an optical "bar code" reader for example, which can be used by the laboratory technician to read the RFID tag of a new container 2 inserted in the compartment 2.

Before the reagent or substance contained in the container 2 can be used by the processor 1, or rather aspirated and fed to a drum containing the treated sample, its recognition by the control unit CPU is necessary.

In other words, if the identification of the container 2 is negative, or rather if the reader R is not able to read the RFID tag of the container 2 or if the acquired information does not correspond to that expected, the control unit stops the utilization of the product in container 2. In this way, it is possible to prevent the use of low-quality reagents or substances, coming from unsafe sources or from unreliable manufacturers.

When identification is positive, or rather the acquired information is recognised by the control unit CPU as corresponding to that of a product admitted for use, the product in the container 2 is made available for processing.

One of the advantages of the processor 1 according to the present invention lies in the fact that it is possible to program the control unit CPU to allow the use of reagents and substances supplied by one or more trusted manufacturers, who can equip the associated containers 2 with RFID tags suitable for the purpose. In this sense, the manufacturer of the automatic processor 1 and the manufacturers of reagents and chemical substances for processing can come to an agreement to equip the containers 2 with RFID tags identifiable by the processor 1 and containing the information regarding the reagents and substances, as well being provided with suitable information protection and recognition systems.

In the embodiment shown in Figure 2, the reader R is an RFID tag reader positioned in compartment B, able to acquire the information of tags 4 shown in Figure 1. Alternatively, the reader R could be positioned on a hand-held device used by the laboratory technician. For example, the reader R could be of the optical "bar code" reader type.

If the identification elements 4 are bar codes, the reader R is a bar code reader that can be positioned to read the containers 2 inserted in compartment B.

During processing, the drum 5 containing the tissue sample is coupled to the handling head 61, in turn constrained by the electromagnetic unit 65, and moved by the arm 6 between multiple workstations.

In each workstation, the lance 8 can suck up a reagent from one of the containers 2 positioned in compartment B, or another chemical solution, paraffin, xylene, etc. The processor 1 then prepares the chemical bath inside the drum 5, according to what is planned for processing the sample. Identification of the product employed is carried out as described before the control unit CPU activates the means of feeding the same product to the drum 5, or rather before activating the lance 8.

Identification of the elements 4 is automatic and rapid and does not require manual data entry by the operator of the processor 1.

The drum 5 can also be equipped with an identification element 4 that can be read by the reader R. The processor 1 can handle at least two drums 5 simultaneously, each one by corresponding means of handling 6. In order to avoid errors in the identification of processed tissue samples, the elements 4 are applied to each drum 5.

Another very important advantage of the processor 1 lies in the fact that the control unit CPU can store a chronological log of the operations carried out. Given that each sample is identified, for example through the associated code in the RFID tag applied to the drum 5, the unit CPU can store the number and the duration of the treatments carried out, the type of products used for each treatment, etc. In other words, the processor 1 allows all parameters associated with the processing of samples to be stored.

The control unit CPU stores the chronological log of the operations carried out on each sample. If necessary, even quite some time after the processing has been performed, the laboratory technician, or anyone who is interested, can access the chronological log and check if the processing was carried out correctly.

The control unit CPU can be interfaced with external electronic units to allow the transfer and display of information regarding the processing of samples. In this way, it is possible to create a file of the chemical products used, the treatments carried out, the samples processed, etc., which can be useful even some time afterwards for statistical purposes or for checking the correctness of treatments.

The processor 1 makes it possible to prevent the use of low-quality products that could negatively affect the quality of sample processing, with evident advantages with regards to the quality of the slides obtained with the samples.

## Claims

**1.** Automatic processor (1) for histological samples comprising one or more drums (5) suitable for containing the biological material to be processed, means (B1, 65) for handling said drums between multiple workstations, means (8) for feeding the drums (5) with calibrated volumes of reagents, or other chemical substances, from a plurality of vessels (2), and at least one control unit (CPU) for said means of handling (61, 65) and said means of feeding (8), **characterized in that**, in addition, it includes a plurality of identification elements (4), each one associated with a drum (5) and with a vessel (2), and means (R) of recognition of said identification elements (4).

**2.** Automatic processor (1) according to claim 1, **characterized in that** each of said drums (5) includes a tank or another container suitable for containing the biological material to process and the reagents employed.

**3.** Processor according to claim 1, in which said means of recognition (R) are chosen so as to send a signal to said control unit (CPU) based on the outcome of the identification of one or more identification elements (4).

**4.** Processor according to claim 1 or claim 3, **characterized in that** said identification elements (4) are chosen from the set comprising printed labels, magnetic tags, RFID tags, bar codes, special inks and chip cards.

**5.** Processor according to claim 3 or claim 4, **characterized in that** said means of recognition (R) are chosen from the set comprising optical readers, magnetic readers, RFID tag readers and chip cards.

**6.** Processor according to any of previous claims 1-5, **characterized in that** it also includes means (69, 55, 56) of agitating the substances contained in the drums (5) and means (8) of discharging these substances, and **in that** said control unit (CPU) processes the signals provided by said means of recognition and, based on said signal processing, when necessary, and also independently, activates said means of handling (61, 65), said means of feeding (8), said means of agitation (55, 56, 69) and said means of discharge (8).

**7.** Processor according to any of previous claims 1-6, **characterized in that** said control unit (CPU) stops the processing of said biological material and generates an error signal when necessary, on the basis of said identification.

**8.** Processor according to any of previous claims 6-7, **characterized in that** said means of agitation (55, 56) include at least one magnetically operated rotor inside the drum 5.

**9.** Method for operating an automatic processor (1) for histological samples comprising one or more drums (5) suitable for containing the biological material to be processed, means (61 and 65) for handling said drums (5) between multiple workstations, means (8) for feeding the drums (5) with calibrated volumes of reagents, or other chemical substances, from a plurality of vessels (2) and a control unit (CPU) for said means of handling (61, 65) and said means of feeding (8), **characterized by** the phases of:
- providing each drum (5) and each vessel (2) with at least one identification element (4),
- carrying out the identification of said drums (5) and said vessels (2) via means of recognition (R) able to read the associated identification elements (4),
- sending a signal indicating the outcome of identification for processing to said control unit (CPU), and
- operating said means of handling (61, 65) and said means of feeding (8) on the basis of said processing.

**10.** Method according to claim 9, **characterized in that** said identification phase is carried out before each activation of said means of handling (61, 65) and said means of feeding (8).

**11.** Method according to claim 9 or claim 10, **characterized in that** it also includes a regulating phase, based on said processing, of at least one operating parameter of the processor chosen from the flows of reagents or other chemical substances fed to said drums (5), the duration and the sequence of treatments on said biological material with said reagents/chemical substances.

**12.** Method according to any of previous claims 9-11, **characterized in that** it includes a further phase of halting the processing of said biological material and generating an error signal when necessary, on the basis of said processing.

**13.** Method according to any of previous claims 9-12, **characterized in that** it includes a further regulating phase for the duration and/or intensity of agitation of the contents of at least one drum (5) on the basis of said processing.
